# EUROPÄISCHE PATENTSCHRIFT

(11) **EP 0 688 460 B1**
(45) Veröffentlichungstag und Bekanntmachung des Hinweises auf die Patenterteilung: **05.02.1997**
(21) Anmeldenummer: 94909090.6
(22) Anmeldetag: 01.03.1994
(51) Int. Cl.: H01B 3/30, C08G 18/66, C08G 18/80, C08K 5/15

(54) **VERZINNBARE DRAHTBESCHICHTUNGSMITTEL SOWIE VERFAHREN ZUM KONTINUIERLICHEN BESCHICHTEN VON DRÄHTEN**
TIN PLATABLE WIRE-COATING AGENTS AND METHOD OF CONTINUOUSLY COATING WIRES USING THE AGENTS
AGENTS ETAMABLES D'ENROBAGE DE FILS ET PROCEDE D'ENROBAGE CONTINU DE FILS

(30) Priorität: 12.03.1993 DE 4307848
(43) Veröffentlichungstag der Anmeldung: 27.12.1995
(73) Patentinhaber: Dr. Beck & Co. Aktiengesellschaft, 20539 Hamburg-Rothenburgsort (DE)
(72) Erfinder: SCHINK, Michael, Guildford Surrey GU1 2BS (GB); LIENERT, Klaus-Wilhelm, D-22763 Hamburg (DE); RUNGE, Joachim, D-21465 Reinbek (DE); HENTSCHEL, Silvia, D-20459 Hamburg (DE)
(74) Vertreter: Münch, Volker, Dr.
(86) Internationale Anmeldenummer: EP9400583
(87) Internationale Veröffentlichungsnummer: WO9420966

(56) Entgegenhaltungen:
- WO-A-91/07469
- DE-A- 1 446 735

## Beschreibung

Die vorliegende Erfindung betrifft verzinnbare Drahtbeschichtungsmittel auf der Basis hydroxylgruppenhaltiger Polyester, blockierter Polyisocyanate, organischer Lösemittel und Katalysatoren. Gegenstand der vorliegenden Erfindung ist außerdem ein Verfahren zum kontinuierlichen Beschichten von Drähten unter Verwendung dieser verzinnbaren Drahtbeschichtungsmittel.

Es ist bekannt, auf elektrischen Leitern isolierende, lötfähige bzw. verzinnbare Überzüge herzustellen. Darunter werden Beschichtungen verstanden, die beim Eintauchen der isolierten elektrischen Leiter in ein auf erhöhte Temperatur erhitztes Lötbad zerstört bzw. abgelöst werden, soweit der Leiter in das Bad eingetaucht worden ist, so daß an diesen Stellen das blanke Metall freigelegt wird und unmittelbar für elektrisch leitende Verbindungen benutzt werden kann. Hierfür ist es erforderlich, daß die Entfernung des isolierenden Überzugs beim Eintauchen in das Lötbad innerhalb möglichst kurzer Zeit, das heißt innerhalb weniger Sekunden, erfolgt. Je kürzer diese Zeit ist, desto leichter läßt sich die Endisolierung und damit eine technisch vorteilhafte Durchführung erzielen.

Elektroisolierlacke auf der Basis hydroxylgruppenhaltiger Polyester und blockierter Isocyanate sind in großer Zahl bekannt und beispielsweise beschrieben in der DE-A-16 44 794 und der DE-A-19 57 157. Derartige Elektroisolierlacke zeichnen sich bei ihrer Verwendung als Drahtlacke insbesondere durch ihre guten isolierenden Eigenschaften aus und dadurch, daß sie verzinnbar sind (IEC 851-4, IEC 317-4). Verzinnbare isolierte Drähte geben beim Eintauchen in ein auf erhöhte Temperaturen erhitztes Lötbad unter Zerstörung der Isolierschicht das blanke Metall des Leiters frei, das somit für elektrisch leitende Verbindungen unmittelbar zugänglich ist. Ein technischer Vorteil kann dadurch erzielt werden, daß die Zeit zur Entfernung der isolierenden Lackschicht möglichst kurz ist. Der Forderung nach großer Thermolabilität unter den Lötbadbedingungen steht eine hohe Thermostabilität, die von Lackdrähten für den Einsatz in elektrischen Bauteilen, wie z.B. Elektrotransistoren oder Transformatoren, gefordert wird, gegenüber. Während die Verzinnbarkeit auf die Anwesenheit von Urethangruppen im Lackfilm zurückzuführen ist, wird die Wärmebeständigkeit maßgeblich durch die Wahl des Polyesters beeinflußt. Dabei ergeben Polyester aus aromatischen Dicarbonsäuren einen besonders guten Temperaturindex und eine gute Wärmeschockfestigkeit der erhaltenen Überzüge (IEC 851-6).

Als organische Lösemittel für verzinnbare Drahtlacke auf der Basis hydroxylgruppenhaltiger Polyester und blockierter Polyisocyanate werden überwiegend Phenole, insbesondere Kresole und Xylenole, verwendet. Mit der Verwendung dieser kresolischen bzw. phenolischen Lösungsmittel sind jedoch zahlreiche Probleme verbunden, beispielsweise Geruchsbelästigungen und Umweltgefährdung aufgrund der Toxizität dieser Lösemittel bei Applikation derartiger Drahtlacke. Es bestehen da Bemühungen, diese kresolischen und phenolischen Lösemittel durch andere geeignete organische Lösemittel zu ersetzen.

Außerdem gehen die Bestrebungen dahin, Drahtlacke mit einem möglichst hohen Festkörpergehalt zur Verfügung zu stellen.

Aus der japanischen Offenlegungsschrift Nr. 58-101162 sind verzinnbare Drahtbeschichtungsmittel auf der Basis blockierter Polyisocyanate, hydroxylgruppenhaltiger Polyester, organischer Lösemittel und von Acetylacetonat-Metall-Komplex-Katalysatoren bekannt. Der Lösemittelgehalt der beschriebenen Drahtbeschichtungsmittel liegt unterhalb von 40 Gew.-%, bezogen auf die Summe von blockiertem Polyisocyanat, hydroxylgruppenhaltigem Polyester und organischem Lösemittel. In den Beispielen der JP-A-58-101162 wird ausschließlich Kresol als Lösemittel verwendet. Mit der Verwendung von Kresolen sind jedoch zahlreiche Probleme verbunden, wie Geruchsbelästigungen und Umweltgefährdungen aufgrund der Toxizität des Kresols bei Applikation kresolischer Drahtlacke. Aus der japanischen Offenlegungsschrift geht hervor, daß Drahtlacke auf der Basis hydroxylgruppenhaltiger Polyester, blockierter Polyisocyanate, Kresol und Schwermetall-Naphthenaten an der Stelle von Acetylacetonat-Metall-Komplex-Katalysatoren zu trüben Beschichtungsmitteln führen, die nach der Applikation auf Drähte zu Überzügen mit schlechten Eigenschaften führen.

Schließlich sind aus der WO-A-91 07 469 Drahtlacke bekannt, die hydroxylgruppenhaltige Polyester und vollständig blockierte Diisocyanataddukte enthalten. Als Lösemittel enthalten diese Drahtlacke eine Mischung aus Alkylencarbonaten und aromatischen und/oder aliphatischen Kohlenwasserstoffen.

Der vorliegenden Erfindung lag somit die Aufgabe zugrunde, bei Raumtemperatur hochviskose verzinnbare Drahtbeschichtungsmittel ("Hot Melt Resins") zur Verfügung zu stellen, die die genannten Nachteile der bekannten Drahtbeschichtungsmittel vermeiden. Unter besonderer Berücksichtigung ökonomischer und ökologischer Interessen sollten die Drahtbeschichtungsmittel aus der Schmelze in dafür vorgesehenen Anlagen auf Drähte applizierbar sein. Die Drahtbeschichtungsmittel sollten insbesondere einen möglichst hohen Festkörpergehalt aufweisen, lagerstabil und weitgehend kresolfrei sein. Die aus der Schmelze beschichteten Drähte sollten insbesondere eine kurze bzw. gegenüber dem Stand der Technik verbesserte Lötzeit aufweisen, und die erhaltenen überzüge sollten eine gute Haftung auf Kupfer-Drähten und einen ausreichenden Wärmeschock besitzen.

Diese Aufgabe wird überraschenderweise gelöst durch verzinnbare Drahtbeschichtungsmittel auf der Basis hydroxylgruppenhaltiger Polyester, blockierter Polyisocyanate, organischer Lösemittel und Katalysatoren, wobei die Drahtbeschichtungsmittel dadurch gekennzeichnet sind, daß sie
A) 7 bis 25 Gew.-% hydroxylgruppenhaltiger Polyester,
B) 55 bis 70 Gew.-% eines vollständig blockierten aromatischen Diisocyanatadduktes oder mehrerer vollständig blockierter aromatischer Diisocyanataddukte,
C) 0,1 bis 3 Gew.-% Katalysatoren,
D) 1 bis 8 Gew.-% eines Polyols oder mehrerer Polyole und
E) 1 bis 36,9 Gew.-% eines Alkylencarbonats oder mehrerer Alkylencarbonate
enthalten, wobei das Gesamtgewicht der Drahtbeschichtungsmittel jeweils 100 Gew.-% beträgt.

Gegenstand der vorliegenden Erfindung sind außerdem Verfahren zum kontinuierlichen Beschichten von Drähten, bei denen diese Drahtbeschichtungsmittel auf die Drahtoberfläche appliziert und anschließend eingebrannt werden.

Es ist überraschend und war nicht vorhersehbar, daß Formulierungen von hydroxylgruppenhaltigen Polyestern mit vollständig blockierten aromatischen Diisocyanataddukten, Katalysatoren, Alkoholen und Alkylencarbonaten gut verträglich und stabil sind. Außerdem ist überraschend und war nicht vorhersehbar, daß die weitgehend kresolfreien Drahtbeschichtungsmittel zu Drahtbeschichtungen mit hervorragenden technologischen Eigenschaften, wie etwa einer Verzinnungszeit von unter 2 Sekunden bei einer Temperatur von 375°C, führen. Die erfindungsgemäßen Drahtbeschichtungsmittel weisen bei einer für die Verarbeitung günstigen Viskosität hohe Festkörpergehalte auf. Außerdem sind sie weitgehend kresolfrei, so daß durch die erfindungsgemäßen Zusammensetzungen die Umweltbelastung beim Einbrennen der Zusammensetzungen verringert wird. Außerdem weisen die aus den erfindungsgemäßen Drahtbeschichtungsmitteln erhaltenen Überzüge eine gute Haftung und einen ausreichenden Wärmeschock auf.

Im folgenden sollen nun zunächst die einzelnen Komponenten der erfindungsgemäßen Drahtbeschichtungsmittel näher erläutert werden.

Die hydroxylgruppenhaltigen Polyester (Komponente A) sind bereits bekannt und beispielsweise in der DE-A-28 40 352 und der DE-A-25 45 912 beschrieben. Die Herstellung der Polyesterharze erfolgt in bekannter Weise durch Veresterung von mehrwertigen Carbonsäuren mit mehrwertigen Alkoholen in Gegenwart geeigneter Katalysatoren. Anstelle der freien Säure können auch deren esterbildende Derivate eingesetzt werden. Für die Herstellung der Polyester geeignete Alkohole sind beispielsweise Ethylenglykol, Propylenglykol-1,2, Propylenglykol-1,3, Butandiol-1,2, Butandiol-1,3, Butandiol-1,4, Pentandiol-1,5, Neopentylglykol, Diethylenglykol, Triethylenglykol sowie Triole, wie z.B. Glycerin, Trimethylolethan, Trimethylolpropan und Tris-2-hydroxyethylisocyanurat.

Bevorzugt eingesetzt werden Mischungen von Ethylenglykol und Tris-2-hydroxyethylisocyanurat. Die Verwendung von Tris-2-hydroxyethylisocyanurat führt zu hohen Erweichungstemperaturen der Lackschicht.

Geeignete Carbonsäuren sind beispielsweise Phthalsäure, Isophthalsäure, Terephthalsäure sowie deren veresterbare Derivate, wie z.B. die Anhydride, soweit sie existieren, und die niederen Alkylester der genannten Säuren, wie z.B. Methyl-, Ethyl-, Propyl-, Butyl-, Amyl-, Hexyl- und Octylphthalate, -terephthalate und -isophthalate. Einsetzbar sind sowohl die Halbester, die Dialkylester als auch Mischungen dieser Verbindungen. Einsetzbar sind auch die entsprechenden Säurehalogenide dieser Verbindungen.

Für die Herstellung der Polyester geeignete Katalysatoren, die in Mengen von 0,01 bis 5 Gew.-%, bezogen auf das Einsatzgemisch, eingesetzt werden, sind übliche Veresterungskatalysatoren. Beispiele für geeignete Katalysatoren sind Schwermetallsalze, wie Bleiacetat, Zinkacetat, weiterhin organische Titanate, wie z.B. Triethanolamintitanat, Cerverbindungen sowie organische Säuren, wie z.B. p-Toluolsulfonsäure.

Die hydroxylgruppenhaltigen Polyester (Komponente A) weisen im allgemeinen eine Hydroxylzahl im Bereich von 200 bis 900 mg KOH/g, bevorzugt 250 bis 750 mg KOH/g, auf. Die Polyester werden in einem Anteil von 7 bis 25 Gew.-%, bezogen auf das Gesamtgewicht der Drahtbeschichtungsmittel, eingesetzt.

Sie können durch die bekannten Verfahren der Schmelzkondensation oder durch Lösungskondensation in einem adäquaten Lösemittel, wie beispielsweise 14-Methylpyrrolidon, Methyldiglykol, Ethyldiglykol und Ethylenglykol hergestellt werden.

Ein Beispiel für einen geeigneten Polyester (Komponente A) ist das unter der Handelsbezeichnung Desmophen 600 (Hersteller: Bayer AG) erhältliche Produkt.

Als Komponente B) werden 55 bis 70 Gew.-% eines vollständig blockierten aromatischen Diisocyanatadduktes oder mehrerer vollständig blockierter aromatischer Diisocyanataddukte gemäß der vorliegenden Erfindung eingesetzt. Unter aromatischen Diisocyanaten sind solche Isocyanate zu verstehen, bei denen die NCO-Gruppe an einen Aromaten gebunden ist. Die Isocyanataddukte werden beispielsweise hergestellt durch Umsetzung eines aromatischen Diisocyanates mit einem Polyol, wobei die Mengen dieser Verbindungen so gewählt werden, daß die Isocyanatgruppen im überschuß vorliegen. Die restlichen freien Isocyanatgruppen dieses Adduktes werden mit einem Blockierungsmittel umgesetzt. Es ist aber selbstverständlich auch möglich, die Isocyanate zunächst mit dem Blockierungsmittel und die restlichen, freien Isocyanatgruppen mit der Polyolkomponente umzusetzen.

Der Aufbau des Isocyanatadduktes wird vorteilhafterweise in einem gegenüber Isocyanatgruppen inerten, das entstehende Polyurethan gut lösenden Lösemittels in Gegenwart eines Katalysators bei Temperaturen von 30 bis 120°C durchgeführt.

Beispiele für geeignete aromatische Diisocyanate sind 1,3-Phenylendiisocyanat, 1,4-Phenylendiisocyanat, 2,5-Toluylendiisocyanat, 2,6-Toluylendiisocyanat, 4,4'-Bisphenylendiisocyanat, 1,5-Naphthylendiisocyanat, 1,4-Naphthylendiisocyanat, 4,4'-Diphenylmethandiisocyanat, 2,4'-Diphenylmethandiisocyanat. Besonders bevorzugt wird als aromatisches Diisocyanat der Komponente B) 4,4'-Diphenylmethandiisocyanat oder ein Gemisch aus 4,4'-Diphenylmethandiisocyanat und 2,4'-Diphenylmethandiisocyanat eingesetzt.

Beispiele von geeigneten Polyolen für die Adduktbildung sind Trimethylolpropan, Neopentylglykol, Butandiol-1,3, Butandiol-1,4, Glycerin, Hexantriol, Pentaaerythrit und Glykole, wie z.B. Ethylenglykol und Propylenglykol.

Für die Blockierung der freien Isocyanatgruppen geeignet sind alle bekannten Blockierungsmittel, wobei aber gewährleistet sein muß, daß eine Deblockierung erst bei Temperaturen oberhalb von 120°C eintritt. Beispiele für geeignete Verbindungen sind aliphatische, cycloaliphatische oder aromatische Alkohole, wie z.B. Butanol, Isobutanol, 2-Ethylhexanol, Cylcohexanol, Cyclopentanol, Benzylalkohol, Phenole, Kresole; β-Hydroxyalkylether, wie z.B. Methyl-, Ethyl-, Butylglykol; Amine, wie z.B. Di-n-Butylamin, Di-n-Hexylamin; Oxime, wie z.B. Methylethylketoxim, Diethylketoxim; Hydroxylamine und Lactame, wie z.B. ε-caprolactam sowie andere Verbindungen, die ein Wasserstoffatom enthalten, das durch seine Reaktivität eine Umsetzung des Blockierungsmittels mit dem Isocyanat ermöglicht.

Besonders bevorzugt wird als Komponente B) ein Umsetzungsprodukt aus 4,4'-Diphenylmethandiisocyanat oder aus einem Gemisch von 4,4'-Diphenylmethandiisocyanat und 2,4'-Diphenylmethandiisocyanat mit Trimethylolpropan, Butandiol-1,3 und Phenol eingesetzt, wobei die Isocyanatgruppen des 4,4'-Diphenylmethandiisocyanats bzw. des 2,4'-Diphenylmethandiisocyanats in vollständig blockierter Form vorliegen. Derartige Isocyanataddukte sind auf dem Markt beispielsweise erhältlich unter der Handelsbezeichnung Coronate 2503 (Hersteller: Nippon Polyurethane Co., Ltd.).

Besonders bevorzugt werden als Blockierungsmittel Phenole, insbesondere Xylenole und Kresole eingesetzt.

Ganz besonders bevorzugt im Rahmen dieser Erfindung sind verzinnbare Drahtbeschichtungsmittel, bei denen die Komponente B) durch Umsetzung von 4,4'-Diphenylmethandiisocyanat oder eines Gemisches von 4,4'-Diphenylmethandiisocyanat und 2,4'-Diphenylmethandiisocyanat mit Trimethylolpropan, Butandiol-1,3 sowie Kresolen und/oder Xylenolen verwendet wird, wobei das Molverhältnis der Polyole und der Diisocyanatkomponente 1 : (2 - 4) und das Verhältnis der Summe der alkoholischen und der phenolischen OH-Gruppen zu den Isocyanatgruppen des 4,4'-Diphenylmethandiisocyanats bzw. des 2,4'-Diphenylmethandiisocyanats mindestens 1,1 beträgt.

Die Isocyanataddukte werden bevorzugt in einem Zweistufenverfahren hergestellt, indem zunächst eine Umsetzung der Polyole mit der Diisocyanatkomponente erfolgt und anschließend die noch freien Isocyanatgruppen mit der Phenolkomponente blockiert werden. So können die Polyole beispielsweise mit der Isocyanatkomponente in einem geeigneten organischen Lösemittel, wie z.B. 1-Methoxy-2-propylacetat oder Methylisobutylketon, bei Temperaturen von etwa 80°C umgesetzt werden (1. Stufe) und anschließend die noch freien Isocyanatgruppen mit der Phenolkomponente blockiert werden (2. Stufe). Vorzugsweise wird diese Reaktion ohne Katalysatoren durchgeführt. Nach der ersten und der zweiten Reaktionsstufe wird das Ende der Reaktion jeweils anhand des NCO-Gehaltes überprüft.

Ein weiteres mögliches Herstellungsverfahren besteht darin, das Diphenylmethandiisocyanat zunächst mit dem Blockierungsmittel umzusetzen und anschließend eine Umsetzung mit der Polyolkomponente durchzuführen.

Die Katalysatorkomponente C) der erfindungsgemäßen verzinnbaren Drahtbeschichtungsmittel wird in einem Anteil von 0,1 bis 3 Gew.-%, bezogen auf das Gesamtgewicht der Drahtlacke, verwendet. Bevorzugt wird der Katalysator ausgewählt aus der Gruppe der Metalloctoate und der Metallnaphthenate. Beispiele sind Bleioctoat, Calciumoctoat, Ceroctoat, Kobaltoctoat, Manganoctoat, Zinkoctoat, Zirkonoctoat, Bleinaphthenat. Weiterhin geeignete Katalysatoren sind Butyltitanate.

Die erfindungsgemäßen verzinnbaren Drahtbeschichtungsmittel enthalten 1 bis 8 Gew.-%, bezogen auf das Gesamtgewicht der Drahtbeschichtungsmittel, eines Polyols oder mehrerer Polyole (D). Beispiele für geeignete Alkohole sind Ethylenglykol, Propylenglykol-1,2 und -1,3, Butandiol-1,2, -1,3 und -1,4, Pentandiol-1,5, Neopentylglykol, Diethylenglykol, Triethylenglykol. Besonders bevorzugt wird Diethylenglykol als Komponente D) verwendet. Die Alkoholkomponente D) hat einen Einfluß auf Verlauf und Flexibilität der erhaltenen Drahtlacküberzüge. Die Alkoholkomponente D) sollte einen Siedepunkte von mindestens 180°C aufweisen.

Die erfindungsgemäßen Drahtbeschichtungsmittel enthalten 1 bis 36,9 Gew.-%, bezogen auf das Gesamtgewicht der Drahtbeschichtungsmittel, eines Alkylencarbonats oder mehrerer Alkylcaronate (E) der Formel (I) 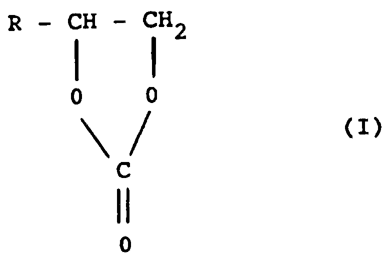 wobei R entweder Wasserstoff oder einen aliphatischen oder einen cycloaliphatischen oder einen aromatischen oder einen alkylaromatischen Rest bedeutet. Beispiele für geeignete cyclische Carbonate der Formel (I) sind Ethylencarbonat, Propylencarbonat, Isobutylencarbonat und 4-Phenyl-1,3-dioxolan-2. Besonders bevorzugt wird Propylencarbonat eingesetzt.

Außerdem können die erfindungsgemäßen Drahtbeschichtungsmittel noch übliche Hilfs- und Zusatzstoffe in üblichen Mengen, bevorzugt in einem Anteil bis zu 1 Gew.-%, bezogen auf den Festkörper der Drahtbeschichtungsmittel, enthalten. Als Hilfsmittel für die Drahtbeschichtungsmittel können beispielsweise verlaufsverbessernde Phenol- oder Melaminharze oder andere übliche Verlaufsmittel, zum Beispiel auf Basis von Polyacrylaten, eingesetzt werden.

Die Drahtbeschichtungsmittel werden nach den üblichen Verfahren hergestellt.

Die erfindungsgemäßen Drahtbeschichtungsmittel werden mittels üblicher Drahtlackiermaschinen für Schmelzharze aufgebracht und gehärtet. Derartige Drahtlackiermaschinen sind bekannt und brauchen daher nicht näher erläutert zu werden.

Die erfindungsgemäßen Schmelzharze sind lagerstabil. Die aus der Schmelze mit den erfindungsgemäßen Beschichtungsmitteln beschichteten Drähte weisen eine kurze Lötzeit auf. Der Vergleich der erfindungsgemäßen Beschichtungsmittel mit vergleichbaren Zusammensetzungen gemäß der JP-OS 58-101 162 (siehe Beispiele 7 - 9 der JP-OS 58-101 162, in denen analog zu den nachfolgend beschriebenen Beispielen das Isocyanataddukt mit der Handelsbezeichnung Coronate 2503, Hersteller Nippon Polyurethane, verwendet wird) zeigt, daß die erfindungsgemäßen Schmelzharze eine kürzere Verzinnungszeit aufweisen. Außerdem sind die aus den erfindungsgemäßen Schmelzharzen erhaltenen Beschichtungen durch eine hervorragende Haftung auf Kupferdrähten sowie durch sehr gute Wärmeschockeigenschaften gekennzeichnet.

Im folgenden wird nun die Erfindung anhand von Ausführungsbeispielen näher erläutert. Alle Angaben über Teile und Prozente stellen dabei Gewichtsangaben dar, falls nicht ausdrücklich etwas anderes angegeben wird.

### A) Herstellung eines Isophthalsäurepolyesters:

Aus 194,54 g Ethylenglykol, 329,7 g Glycerin, 475,43 g Isophthalsäure und 0,30 g Zinn-(II)-oxalat werden durch Erhitzen auf 220°C Polyesterharze mit einer Hydroxylzahl im Bereich von 660 bis 760 mg KOH/g hergestellt.

### Beispiel 1:

Zu 100 g Propylencarbonat werden unter ständigem Rühren 43,05 g Diethylenglykol und 121,47 g des unter A) hergestellten Isophthalsäurepolyesters gegeben. Nach dem Lösevorgang unter Rühren bei 20°C bis 150°C, bevorzugt bei 110°C bis 130°C, werden portionsweise 645,81 g des Isocyanatadduktes mit der Handelsbezeichung Coronate 2503 (Hersteller: Nippon Polyurethane) hinzugefügt und bei dieser Temperatur gerührt, bis eine vollständige Lösung erreicht ist. Anschließend wird auf eine Temperatur von 100 bis 110°C gebracht, und es werden 7,46 g Zinkoctoat und 82,21 g Propylencarbonat hinzugefügt. Nach einstündigem Rühren bei dieser Temperatur wird über ein Metallsieb filtriert und abgekühlt.

| | |
|---|---|
| Viskosität bei 120°C: | 400 mPas |
| Viskosität bei 23°C: | > 10000 mPas |
| Festkörper (1 g, 1 h, 180°C): | 62,6 % |

Das Harz ist über Monate lagerstabil.

### Beispiel 2:

Zu 100 g Propylencarbonat werden unter ständigem Rühren 40,93 g Diethylenglykol und 206,62 g des Polyesters mit der Handelsbezeichnung Desmophen 600 (Hersteller: Bayer AG) gegeben. Nach dem Lösen unter Rühren bei 20°C bis 150°C, bevorzugt bei 110°C bis 130°C, werden portionsweise 612,06 g des unter der Handelsbezeichnung Coronate 2503 (Hersteller: Nippon Polyurethane) erhältlichen Isocyanatadduktes hinzugefügt und bei dieser Temperatur gerührt, bis eine vollständige Lösung eingetreten ist. Es wird auf eine Temperatur von 100 bis 110°C erhitzt, und es werden 7,06 g Zinkoctoat und 33,33 g Propylencarbonat hinzugefügt. Nach einem einstündigen Rühren wird über ein Metallsieb filtriert und abgekühlt.

| | |
|---|---|
| Viskosität bei 120°C: | 500 mPas |
| Viskosität bei 23°C: | > 10000 mPas |
| Festkörper: (1 g 1 h 200°C): | 65,3 % |

Das Harz ist über Monate lagerstabil.

### Vergleichsbeispiel:

Eine gemäß dem Beispiel 1 hergestellte Lackformulierung aus 143,05 g Kresol, 121,47 g des unter A) hergestellten Isophthalsäurepolyesters, 645,81 g des Isocyanatadduktes mit der Handelsbezeichnung Coronate 2503, 7,46 g Zinkoctoat und 82,21 g Kresol ist trübe und weist eine nur ungenügende Lackierbarkeit auf einer üblichen Drahtlackieranlage für Schmelzharze auf.

Die in den Beispielen 1 und 2 beschriebenen Drahtbeschichtungsmittel werden auf einer Schmelzharzlackiermaschine lackiert.

### Lackierbedingungen:

| | |
|---|---|
| Ofen: | FLA 290, Fa. Aumann |
| Ofenlänge: | 2,9 m |
| Ofentemperatur: | 410 bis 460°C |
| Auftragssystem: | Düsen |
| Temperatur des Auftragsystems: | 80 bis 120°C |
| Abzugsgeschwindigkeit: | 12 bis 40 m/min. |
| Drahtdurchmesser: | 0,71 mm |
| Anzahl der Harzaufträge: | 4 |
| Zunahmegrad: | 2 L |

Die beschichteten Drähte werden nach IEC 851 geprüft. Außerdem wird die Beständigkeit der polyurethanbeschichteten Drähte gegenüber Haarrißbildung (Crazing) geprüft. Diese in Anlehnung an die JIS-Norm Nr. 3303 durchgeführte Prüfung ist beschrieben in S. Masuda, N. Asano, Sumitomo Electric Technical Rev. 17 (1977) 32.

Die folgende Tabelle zeigt die Ergebnisse im überblick.

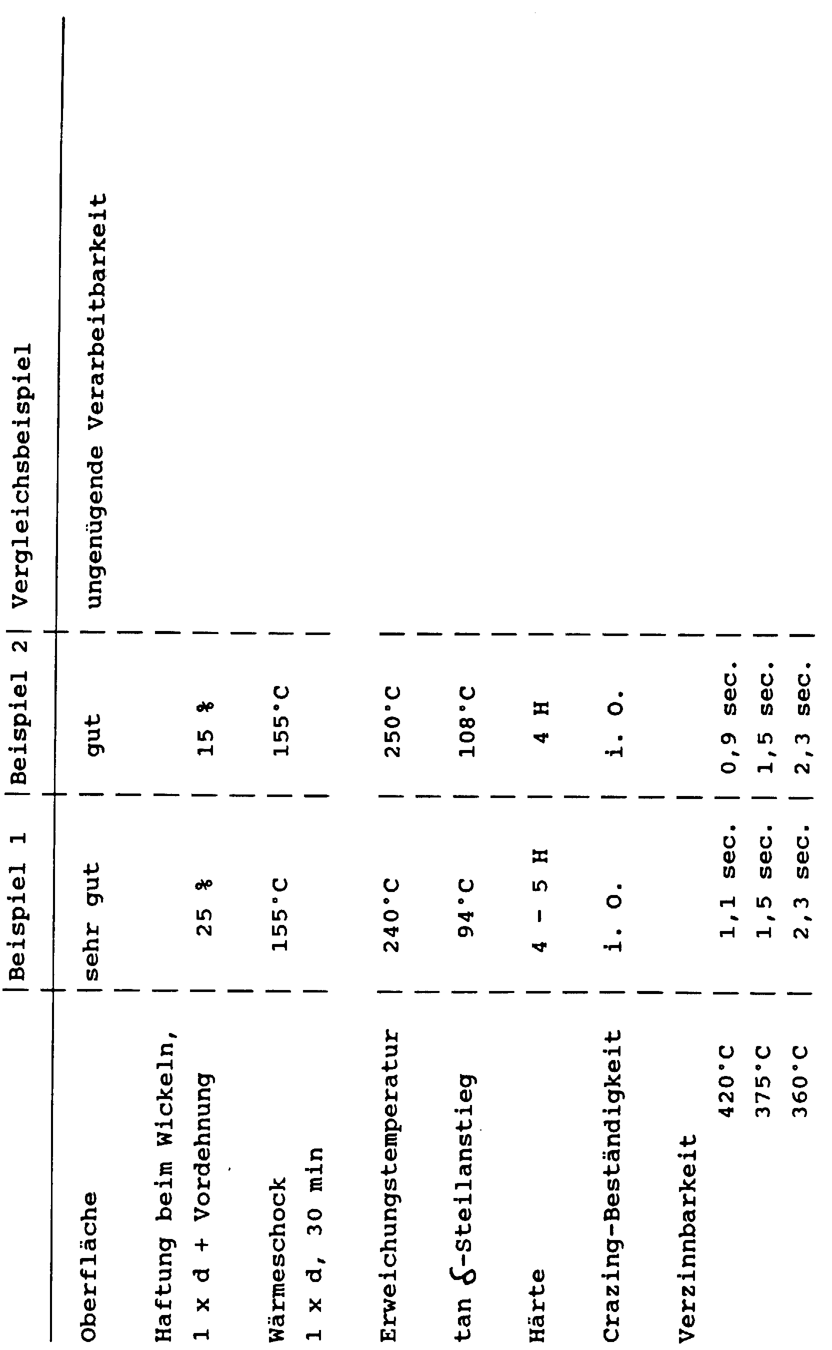

## Patentansprüche

1. Verzinnbare kresolfreie Drahtbeschichtungsmittel auf der Basis hydroxylgruppenhaltiger Polyester, blockierter Polyisocyanate, organischer Lösemittel und Katalysatoren, dadurch gekennzeichnet, daß die Drahtbeschichtungsmittel
A) 7 bis 25 Gew.-% hydroxylgruppenhaltiger Polyester,
B) 55 bis 70 Gew.-% eines vollständig blockierten aromatischen Diisocyanatadduktes oder mehrerer vollständig blockierter aromatischer Diisocyanataddukte,
C) 0,1 bis 3 Gew.-% Katalysatoren,
D) 1 bis 8 Gew.-% eines Polyols oder mehrerer Polyole und
E) 1 bis 36,9 Gew.-% eines Alkylencarbonats oder mehrerer Alkylencarbonate
enthalten, wobei das Gesamtgewicht der Drahtbeschichtungsmittel jeweils 100 Gew.-% beträgt.

2. Verzinnbare Drahtbeschichtungsmittel nach Anspruch 1, dadurch gekennzeichnet, daß als aromatisches Diisocyanat der Komponente B) 4,4'-Diphenylmethandiisocyanat oder ein Gemisch aus 4,4'-Diphenylmethandiisocyanat und 2,4'-Diphenylmethandiisocyanat verwendet wird.

3. Verzinnbare Drahtbeschichtungsmittel nach Anspruch 1 oder 2, dadurch gekennzeichnet, daß die Komponente B) ein Umsetzungsprodukt aus 4,4'-Diphenylmethandiisocyanat oder aus einem Gemisch von 4,4'-Diphenylmethandiisocyanat und 2,4'-Diphenylmethandiisocyanat mit Trimethylolpropan, Butandiol-1,3 und Phenolen ist, wobei die Isocyanatgruppen des 4,4'-Diphenylmethandiisocyanats bzw. des 2,4'-Diphenylmethandiisocyanats in vollständig blockierter Form vorliegen.

4. Verzinnbare Drahtbeschichtungsmittel nach Anspruch 3, dadurch gekennzeichnet, daß die Komponente B) durch Umsetzung von 4,4'-Diphenylmethandiisocyanat oder eines Gemisches von 4,4'-Diphenylmethandiisocyanat und 2,4'-Diphenylmethandiisocyanat mit Trimethylolpropan, Butandiol-1,3 sowie Kresolen und/oder Xylenolen erhalten wird, wobei das Molverhältnis der Polyole und der Diisocyanatkomponente 1 : (2 - 4) und das Verhältnis der Summe der alkoholischen und der phenolischen OH-Gruppen zu den Isocyanatgruppen des 4,4'-Diphenylmethandiisocyanats bzw. des 2,4'-Diphenylmethandiisocyanats mindestens 1,1 beträgt.

5. Verzinnbare Drahtbeschichtungsmittel nach Anspruch 1 bis 4, dadurch gekennzeichnet, daß als Komponente D) Diethylenglykol verwendet wird.

6. Verzinnbare Drahtbeschichtungsmittel nach Anspruch 1 bis 5, dadurch gekennzeichnet, daß als Alkylencarbonat E) Propylencarbonat verwendet wird.

7. Verzinnbare Drahtbeschichtungsmittel nach Anspruch 1 bis 6, dadurch gekennzeichnet, daß der verwendete Katalysator C) ausgewählt ist aus der Gruppe der Metalloctoate und der Metallnaphthenate.

8. Verfahren zum kontinuierlichen Beschichten von Drähten, bei dem zunächst ein Drahtbeschichtungsmittel auf der Drahtoberfläche appliziert und anschließend eingebrannt wird, dadurch gekennzeichnet, daß ein Drahtbeschichtungsmittel nach einem der Ansprüche 1 bis 7 eingesetzt wird.

## Claims

1. Solderable, cresol-free wire-coating compositions based on hydroxyl group-containing polyesters, blocked polyisocyanates, organic solvents and catalysts, characterized in that the wire-coating compositions contain
A) from 7 to 25% by weight of hydroxyl group-containing polyesters,
B) from 55 to 70% by weight of a fully blocked aromatic diisocyanate adduct or of a plurality of fully blocked aromatic diisocyanate adducts,
C) from 0.1 to 3% by weight of catalysts,
D) from 1 to 8% by weight of a polyol or of a plurality of polyols, and
E) from 1 to 36.9% by weight of an alkylene carbonate or of a plurality of alkylene carbonates,
the total weight of the wire-coating compositions in each case being 100% by weight.

2. Solderable wire-coating compositions according to Claim 1, characterized in that the aromatic diisocyanate of component B) which is used is 4,4'-diphenylmethane diisocyanate or a mixture of 4,4'-diphenylmethane diisocyanate and 2,4'-diphenylmethane diisocyanate.

3. Solderable wire-coating compositions according to Claim 1 or 2, characterized in that component B) is a reaction product of 4,4'-diphenylmethane diisocyanate or of a mixture of 4,4'-diphenylmethane diisocyanate and 2,4'-diphenylmethane diisocyanate with trimethylolpropane, butane-1,3-diol and phenols, the isocyanate groups of the 4,4'-diphenylmethane diisocyanate and/or of the 2,4'-diphenylmethane diisocyanate being present in fully blocked form.

4. Solderable wire-coating compositions according to Claim 3, characterized in that component B) is obtained by reacting 4,4'-diphenylmethane diisocyanate or a mixture of 4,4'-diphenylmethane diisocyanate and 2,4'-diphenylmethane diisocyanate with trimethylolpropane, butane-1,3-diol and cresols and/or xylenols, the molar ratio of the polyols and the diisocyanate component being 1:(2-4) and the ratio of the sum of the alcoholic and phenolic OH groups to the isocyanate groups of the 4,4'-diphenylmethane diisocyanate and/or of the 2,4'-diphenylmethane diisocyanate being at least 1.1.

5. Solderable wire-coating compositions according to Claim 1 to 4, characterized in that diethylene glycol is used as component D).

6. Solderable wire-coating compositions according to Claim 1 to 5, characterized in that propylene carbonate is used as alkylene carbonate E).

7. Solderable wire-coating compositions according to Claim 1 to 6, characterized in that the catalyst C) used is selected from the group of metal octoates and metal naphthenates.

8. Process for the continuous coating of wires, in which a wire-coating composition is first applied to the surface of the wire and is then baked, characterized in that a wire-coating composition according to one of Claims 1 to 7 is employed.

## Revendications

1. Agents étamables d'enrobage de fils, exempts de crésols, à base de polyesters, contenant des groupements hydroxyles, de polyisocyanates bloqués, de solvants organiques et de catalyseurs, caractérisés en ce que les agents d'enrobage contiennent
A) de 7 à 25 % en poids de polyesters contenant des groupements hydroxyles,
B) de 55 à 70 % en poids d'un produit d'addition de diisocyanate aromatique complètement bloqué ou de plusieurs produits de diisocyanate aromatiques complètement bloqués,
C) de 0,1 à 3 % en poids de catalyseurs,
D) de 1 à 8 % en poids d'un polyol ou de plusieurs polyols et
E) de 1 à 36,9 % en poids d'un carbonate d'alkylène ou de plusieurs carbonates d'alkylène,
le poids total des agents d'enrobage de fils étant à chaque fois de 100 % en poids.

2. Agents étamables d'enrobage de fils selon la revendication 1, caractérisés en ce que l'on utilise en tant que diisocyanate aromatique du composant B) le diisocyanate de 4,4'-diphénylméthane ou un mélange de diisocyanate de 4,4'-diphénylméthane et de diisocyanate de 2,4'-diphénylméthane.

3. Agents étamables d'enrobage de fils selon la revendication 1 ou 2, caractérisés en ce que le composant B) est un produit de réaction du diisocyanate de 4,4'-diphénylméthane ou d'un mélange de diisocyanate de 4,4'-diphénylméthane et de diisocyanate de 2,4'-diphénylméthane avec le triméthylolpropane, le butan-1,3-diol et des phénols, les groupements isocyanates du diisocyanate de 4,4'-diphénylméthane, respectivement du 2,4'-diphénylméthane étant présents sous la forme complètement bloquée.

4. Agents étamables d'enrobage de fils selon la revendication 3, caractérisés en ce que le composant B) est obtenu par réaction du diisocyanate de 4,4'-diphénylméthane ou d'un mélange de diisocyanate de 4,4'-diphénylméthane et de diisocyanate de 2,4'-diphénylméthane avec le triméthylolpropane, le butan-1,3-diol ainsi qu'avec des crésols et/ou des xylènols, le rapport molaire des polyols et du composant de diisocyanate étant de 1 : (2 - 4) et le rapport de la somme des groupements OH alcooliques et phénoliques aux groupements isocyanates du diisocyanate de 4,4'-diphénylméthane, respectivement du diisocyanate de 2,4'-diphénylméthane est d'au moins 1,1.

5. Agents étamables d'enrobage de fils selon la revendication 1 à 4, caractérisés en ce que l'on utilise en tant que composant D) le diéthylèneglycol.

6. Agents étamables d'enrobage de fils selon la revendication 1 à 5, caractérisés en ce que l'on utilise en tant que carbonate d'alkylène E) le carbonate de propylène.

7. Agents étamables d'enrobage de fils selon la revendication 1 à 6, caractérisés en ce que le catalyseur utilisé C) est choisi parmi le groupe des octoates métalliques et des naphténates métalliques.

8. Procédé pour l'enrobage en continu de fils, lors duquel l'on procède tout d'abord à l'application sur la surface du fil d'un agent d'enrobage de fils et ensuite à la cuisson de celui-ci, caractérisé en ce que l'on utilise un agent d'enrobage de fils selon l'une quelconque des revendications 1 à 7.
